(19) Europäisches Patentamt
European Patent Office
Office européen des brevets

(11) **EP 2 693 375 A1**

(12) **EUROPEAN PATENT APPLICATION**

(43) Date of publication:
**05.02.2014 Bulletin 2014/06**

(51) Int Cl.:
**G06Q 10/00** *(2012.01)*

(21) Application number: **12368018.3**

(22) Date of filing: **02.08.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Amadeus S.A.S.
06410 Biot (FR)**

(72) Inventor: **Humbert, Amelie
06160 Juan Les pins (FR)**

(74) Representative: **Lippich, Wolfgang
Samson & Partner
Widenmayerstrasse 5
80538 München (DE)**

(54) **Method and system providing inventory optimization for disrupted customers**

(57)     A computer implemented method and system is described to respond to a disruption of airline flights during a flight disruption period. The method includes detecting an occurrence of a flight disruption period and iteratively re-accommodating disrupted passengers to flights leaving after an end of the flight disruption period based on responses of disrupted passengers to re-accommodation proposals communicated to the disrupted passengers. In the method iteratively re-accommodating is performed so as to attempt to minimize a number of no-show disrupted passengers for those flights leaving after the end of the disruption period.

3A: IN RESPONSE TO AN OCCURRENCE OF A TRAVEL DISRUPTION EVENT THAT AFFECTS SOME NUMBER OF PASSENGERS, PERFORMING A FIRST RE-ACCOMMODATION PROCEDURE SO AS TO DETERMINE AN ALTERNATIVE TRAVEL SOLUTION FOR AT LEAST SOME OF THE AFFECTED PASSENGERS

3B: SENDING A MESSAGE TO THOSE AFFECTED PASSENGERS FOR WHICH AN ALTERNATIVE TRAVEL SOLUTION WAS DETERMINED, THE MESSAGE AT LEAST OFFERING EACH AFFECTED PASSENGER A CHOICE TO ACCEPT OR DECLINE THE ALTERNATIVE TRAVEL SOLUTION THAT WAS DETERMINED FOR THAT PASSENGER

3C: ELECTRONICALLY RECORDING RESPONSES RECEIVED FROM THE AFFECTED PASSENGERS TO WHICH THE MESSAGE WAS SENT

3D: BASED ON THE RECORDED RESPONSES, DETERMINING IF THERE IS REMAINING TRAVEL SOLUTION CAPACITY TO ACCOMMODATE SOME NUMBER OF ADDITIONAL AFFECTED PASSENGERS AND, IF THERE IS REMAINING TRAVEL SOLUTION CAPACITY, PERFORMING A SECOND RE-ACCOMMODATION PROCEDURE SO AS TO DETERMINE AN ALTERNATIVE TRAVEL SOLUTION FOR THE ADDITIONAL AFFECTED PASSENGERS

3E: SENDING A MESSAGE TO THE ADDITIONAL AFFECTED PASSENGERS OFFERING EACH ADDITIONAL AFFECTED PASSENGER A CHOICE TO ACCEPT OR DECLINE THE ALTERNATIVE TRAVEL SOLUTION THAT WAS DETERMINED FOR THAT PASSENGER

FIG. 3

EP 2 693 375 A1

**Description**

TECHNICAL FIELD:

The exemplary and non-limiting embodiments of this invention relate generally to travel reservation and booking systems, methods, devices and computer programs and, more specifically, relate to passenger re-accommodation procedures performed in response to a flight disruption.

BACKGROUND:

This section is intended to provide a background or context to the invention that is recited in the claims. The description herein may include concepts that could be pursued, but are not necessarily ones that have been previously conceived, implemented or described. Therefore, unless otherwise indicated herein, what is described in this section is not prior art to the description and claims in this application and is not admitted to be prior art by inclusion in this section.

Certain terms that may be found in the specification and/or the drawing figures are defined as follows. Note that while some terms may be defined in the context of airlines providing air travel, the embodiments of this invention can be used with other types of travel providers providing other types of travel modalities including, for example, train, bus, ship and automobile.

No show: A person who books a place, as on an airplane, but neither uses nor cancels the reservation.

Passenger Service System (PSS): A set of critical systems used by a travel provider. In the case of an airline the PSS usually comprises an Airline Reservation System (RES), an Airline Inventory System (INV) and a Departure Control System (DCS).

Passenger Name Record (PNR): contains details of a passenger's reservation and most often comprises other information related to a passenger's trip. PNRs may also contain information to assist airline personnel with passenger handling. PNRs are stored in Reservation Systems (RES).

Re-accommodation: A process that enables an airline to choose most appropriate alternative flight proposals, in a case where there is a schedule change or a flight disruption, for all passengers affected by the change. Its purpose is to provide passengers with a replacement service that is as similar as possible to the service originally booked by the passenger.

Revenue Management: A process of understanding, anticipating and influencing consumer behavior in order to maximize profit from a fixed, perishable resource such as an airline seat. Revenue Management processes can be a least partially automated in a Revenue Management System (RMS) under control of a travel provider.

Leg: A non-stop journey between a "departure" station and an "arrival" station.

Segment: One or more legs, sharing the same commercial transportation service (such as a flight) number. A segment is a saleable product.

Ticket Time Limit: A travel provide such as an airline can assign time limits for ticket issuance. Once the assigned time limit is reached segments can be cancelled if not ticketed.

Disruption management has become a topic of great interest, as several travel disruptions in recent years have demonstrated how difficult it can be to manage the recovery from a situation where air traffic has been stopped for some significant period of time (e.g., days).

Airline schedules are not always flown as planned due to weather, air traffic control (ATC), mechanical problems or security procedures. When there are a number of flight disruptions occurring very close before flight departure, for instance due to bad weather conditions or some other natural occurrence, e.g., volcanic eruption, earthquake, etc., the situation becomes even more difficult for airlines to handle. In these situations a particular airlines may have to deal with many disrupted travellers with only a limited aircraft capacity. As can be appreciated this type of situation can have a significant impact on airline revenue.

In general a flown empty seat does not generate any revenue for the airline. This problem is compounded in the case of a massive travel disruption as there can be additional costs to the airline to provide hotel accommodations and meals for disrupted passengers. Sometimes, the airline must also totally or partly refund the passengers. These additional costs are usually referred to as refund & compensation to passenger.

In the case of a massive disruption the Revenue Management forecasts of the airline become inaccurate as offer and demand are totally different from what has been forecasted. In this case the flight load factors become a primary consideration to optimise in order to speed up the recovery from the disruption from the passenger standpoint, and limit the Refund & compensation to passenger from the airlines' standpoint.

SUMMARY

The foregoing and other problems are overcome, and other advantages are realized, in accordance with the exemplary embodiments of this invention.

In accordance with an aspect of this invention there is provided a computer implemented method to respond to a disruption of airline flights during and especially following a flight disruption period. The method includes, in response to an occurrence of a period of flight disruption, iteratively re-accommodating disrupted passengers to flights leaving after an end of the flight disruption period based on responses of disrupted passengers to re-accommodation proposals communicated to the disrupted passengers. In the method iteratively re-accommodating is performed so as to attempt to minimize a number of no-show disrupted passengers for those flights leaving after the end of the disruption period.

Optionally, the invention may comprise any one of the following features and steps:

- iteratively re-accommodating comprises sending messages to disrupted passengers, each message comprising a re-accommodation proposal, storing a time related to the proposal and storing a time that the response was received.
- the time related to the proposal is any one of: the time when the message was sent to the particular disrupted passenger and the time when the message is received by the particular disrupted passenger.
- a first re-accommodation comprises determining after some predetermined period of time those disrupted passengers to whom a message was sent but from which a response is not received during said first re-accommodation, and a second re-accommodation, subsequent to said first re-accommodation, is performed for a number of additional disrupted passengers that is based on a number of responses received that declined a re-accommodation proposal communicated during said first re-accommodation and on a number of disrupted passengers to whom a message was sent but from which a response was not received during said first re-accommodation.
- a first re-accommodation procedure is performed at least for those disrupted passengers deemed to have a higher intrinsic worth to an air travel provider than other disrupted passengers.
- a re-accommodation proposal is comprised of a flight or flights operated subsequent to the period of flight disruption by at least one of the same air travel provider or another air travel provider.

In accordance with another aspect of this invention there is provided a method to operate travel provider system. The method includes, in response to an occurrence of a travel disruption event that affects some number of passengers, performing a first re-accommodation procedure so as to determine an alternative travel solution for at least some of the affected passengers; sending a message to those affected passengers for which an alternative travel solution was determined, the message at least offering each affected passenger a choice to accept or decline the alternative travel solution that was determined for that passenger; electronically recording responses received from the affected passengers to which the message was sent; based on the recorded responses, determining if there is remaining travel solution capacity to accommodate some number of additional affected passengers and, if there is remaining travel solution capacity, performing a second re-accommodation procedure so as to determine an alternative travel solution for the additional affected passengers; and sending a message to the additional affected passengers offering each additional affected passenger a choice to accept or decline the alternative travel solution that was determined for that passenger.

Preferably, before determining if there is remaining travel solution capacity, the method calculates an expectation to travel for the passengers impacted by disruption, the expectation reflecting a willingness to travel.

Optionally, the invention may comprise any one of the following features and steps:

- recording a response includes recording a time that the response was received.
- sending a message to a particular passenger includes recording any one of: a time that the message was sent and a time that the message is received by a particular disrupted passenger.
- the method comprises determining after some predetermined period of time those affected passengers to whom a message was sent but from which a response is not received. The second re-accommodation procedure is performed for a number of additional affected passengers that is based on a number of responses received that declined the alternative travel solution determined during the first re-allocation procedure and on a number of affected passengers to whom a message was sent but from which a response was not received.
- responses are recorded in a passenger name record associated with a responding passenger.
- the steps of performing re-accommodation procedures and sending messages are iterated so as to minimize an amount of remaining travel solution capacity.
- the first re-accommodation procedure is performed at least for those affected passengers deemed to have a higher intrinsic worth to the travel provider than other affected passengers.
- the travel provider is an air travel provider; the travel disruption event results in the cancellation of one or more flights during a period of time; and the determined alternative travel solution is comprised of a flight or flights operated subsequent to the period of time by at least one of the same air travel provider or another air travel provider.
- before the step of determining if there is remaining travel solution capacity, calculating an expectation to travel for the disrupted passengers.

In accordance with a still further aspect of this invention there is disclosed a travel provider system that comprises at least one data processor and at least one memory including computer program code. The memory and computer program code are configured to, with the at least one data processor, cause the system at least to perform, in response to an occurrence of a travel disruption event that affects some number of passengers, a first re-accommodation procedure so as to determine an alternative travel solution for at least some of the affected passengers; to send a message to those affected passengers for which an alternative travel solution was determined, the message at least offering each affected passenger a choice to accept or decline the alternative travel solution that was determined for that passenger; to electronically record responses received from the affected passengers to which the message was sent; to determine, based on the recorded responses, preferably calculate expectation to travel for passenger impacted by disruption, determining if there is remaining travel solution capacity to accommodate some number of additional affected passengers and, if there is remaining travel solution capacity, to perform a second re-accommodation procedure so as to determine an alternative travel solution for the additional affected passengers and to send a message to the additional affected passengers offering each additional affected passenger a choice to accept or decline the alternative travel solution that was determined for that passenger, the re-accommodation procedures are performed and the messages are sent in an iterative manner so as to maximize a passenger loading factor of the alternative travel solution.

Optionally, the system may comprise any one of the following features:

- the memory and computer program code are further configured to, with the at least one data processor, to store a time in a record of a passenger name record database that the message was any one of sent or received, and when recording the response to also store in the same record of the passenger name record database a time that the response was received.
- the memory and computer program code are further configured to, with the at least one data processor, to determine after some predetermined period of time those affected passengers to whom a message was sent but from which a response is not received, and the second re-accommodation procedure is performed for a number of additional affected passengers that is based on a number of responses received that declined the alternative travel solution determined during the first re-allocation procedure and on a number of affected passengers to whom a message was sent but from which a response was not received.
- the memory and computer program code are further configured to, with the at least one data processor, to perform the first re-accommodation procedure at least for those affected passengers deemed to have a higher intrinsic worth to the travel provider than other affected passengers.
- the travel provider is an air travel provider; the travel disruption event results in a cancellation of one or more flights during a period of time, and the determined alternative travel solution comprises a flight or flights operated subsequent to the period of time by at least one of the same air travel provider or another air travel provider.
- the at least one data processor and the at least one memory including computer program code comprise a part of an inventory/departure control system of the air travel provider.
- the at least one data processor and the at least one memory including computer program code comprise a part of a revenue management system of the air travel provider.
- the at least one data processor and the at least one memory including computer program code comprise a part of an application/server that is interfaced with an inventory/departure control system, a revenue management system, and a reservation system of the air travel provider.
- the system further comprises a notification system configured to send to and receive from the affected passengers electronic messages based on passenger contact information stored in the passenger name record database.
- the memory and computer program code are further configured to, with the at least one data processor, to interactively adjust flight load and flight balance factors based on responses received from affected passengers.

BRIEF DESCRIPTION OF THE DRAWINGS

The foregoing and other aspects of the exemplary embodiments of this invention are made more evident in the following Detailed Description, when read in conjunction with the attached Drawing Figures, wherein:

FIG. 1 shows a system level view of a number of components that can be used to implement this invention.

FIG. 2 shows a time evolution of a disrupted passenger recovery process in accordance with this invention.

FIG. 3 is a logic flow diagram that illustrates the operation of a method, and a result of execution of computer program instructions, in accordance with the exemplary embodiments of this invention.

DETAILED DESCRIPTION

This invention relates in general to massive passenger disruption scenarios (e.g., due to weather or other natural occurrences, industrial occurrences, labor contractual issues, and political reasons) and in particular to a system and method for optimizing the recovery from the disruption from an Inventory/Revenue and Capacity management perspective. The invention provides in one aspect thereof an ability to perform an interactive communication with passengers.

Before describing the invention in further detail it will be useful to provide additional background so that the benefits that are achieved by the use of the invention will become even more apparent.

Currently focus has been placed mainly on customer protection and notification. For example, one focus has been placed on the airline protecting, pro-actively, alternative solutions for their passengers, using advanced methods of flight selection (e.g., using a partner's network). Customer protection includes generally a prioritization of customers and the management of flight capacity (i.e., with consideration of overbooking) to propose disrupted passengers the most appropriate alternative flights, i.e., flights as similar as possible to the flights booked by the customers.

Currently in the airline industry a passenger can either be confirmed on a flight (HK) or waitlisted (HL) (HK booking record status versus HL). At reservation time a passenger has a certain number of days/hours before deciding to buy a travel product and therefore to issue the ticket. Otherwise the booking is cancelled (Ticket Time Limit concept). However, this mechanism does not exist at re-accommodation time. No intermediate status currently exists in the airline industry corresponding to a "Pending traveller's approval".

With regard to customer notification, the focus is placed on notifying as soon as possible the passengers of alternatives they have been transferred to, so that they are informed of the actions taken by the carrier and thus do not need to actually go to the airport to determine their status. This customer communication is performed using multiple channels (e.g., kiosks, web, short message service (sms), email, texting, etc.). However certain communication channels can become overbooked resulting in customers still needing to actually go to the airport to determine their status. As a result the airlines operational staff, in addition to dealing with their normal flight operation duties, then need to also deal directly with disrupted customers.

It can be noted that certain airlines also provide customers with some self re-booking tools at the airport or via the web. The re-accommodation process is therefore not under the direct control of the airline but instead under the control of the customer. The concept "first come-first served" can apply in this case. This approach is clearly limited in a case of a massive disruption where even selected alternative flights can be subsequently cancelled.

In the case of a massive disruption, when passengers can potentially be blocked for days from boarding flights, the conventional ad-hoc disruption tools are not sufficient.

Generally, in order to avoid airport overcrowding airlines instruct disrupted passengers not to come to the airport. As a result airlines do not know if any re-accommodated passengers will actually arrive at the airport, and thus may not know until a few moments before flight departure if successfully re-accommodated passengers will be present.

At least some full service carriers generally consider that all passengers are still candidates to fly until the disruption is recovered from. As a result the current recovery processes can result in a situation where confirmed flights depart with empty seats. This is true at least for the reasons that some disrupted passengers may have found alternative flights on their own, or they may have arranged for some other method of travel to their destination (e.g., train or automobile), or they may have simply decided to extend a Holiday for a few extra days and made other plans.

While disrupted passengers can eventually be notified automatically of their alternative travel itineraries not all passengers will be satisfied with the alternative travel itinerary scheduled for them. This process is inherently manual and not systematic, and the airline will generally not know whether the alternative itinerary or itineraries are acknowledged by the passengers as all new itineraries are rebooked with a confirmed status.

As was made apparent during the recent severe disruptions due to volcanic activity in Iceland, a disruption can involve many thousands of passengers, not all of whom required assistance in rebooking. The affected airlines had no practical way of determining the status of each passenger unless the passenger contacted the airline directly, or the airline contacted the passenger directly.

A desirable goal for an airline is to have more information on the impact their no-show risk (e.g., a passenger who fails to join a flight on which he/she holds reserved space for reasons other than misconnections.). However, the probability that re-accommodated bookings actually materialize remains very difficult to accurately evaluate.

In a case of a severe disruption an airline needs to maximize its aircraft load factors, and it becomes critical for the airline to have an accurate and reliable forecast of the number of passengers that will actually be present in the boarding area just prior to departure of a flight.

There is a clear need to ensure that the airline's planning for passenger transfers to a new alternative flight will fulfil the reality of those passengers actually being present to board the alternative flight.

An aspect of this invention is to provide a proactive re-accommodation that is controlled exclusively by the airline, where those passengers having highest revenue values are re-accommodated first.

Note again that while this invention is described in the context of the airline industry it has applicability to other types of travel providers and travel modalities.

The use of the exemplary embodiments of this invention enables the travel provider to recover more efficiently, more rapidly, and with less cost from a situation where travel has been disrupted for a period of time.

An airline can benefit from this invention by carrying an optimum number of passengers to an optimum destination in an optimal manner after air traffic resumes, using real time information exchanged between the airline and the affected passengers.

Through the use of enhanced communication a passenger is enabled to reply to a flight change notification with an acknowledgement/confirmation/refusal message via any possible communication media (e.g., sms, e-mail, internet, phone, etc). In accordance with an aspect of the invention passenger feedback is automatically integrated in real-time into those airline systems dealing with the re-accommodation for flight optimization purposes.

One advantage of this approach for the airline is that when disrupted passengers do not accept the new itinerary proposal, a flight analyst (a person or a computer application) can either re-accommodate other passengers to released seats or open released seats for sale to new passengers. For those passengers that do not reply the flight analyst can estimate how many passengers will not actually be in the boarding area at the time of the flight and can overbook certain seats. This iterative process can deal with a complex disruption situation with a large number of disrupted flights and passengers. The use of the invention facilitates optimizing the flight load factor, which is an important goal in the case of a massive flight disruption.

The use of the embodiments of this invention reduces the airline's passenger support costs in terms of, for example, the needed airport staff and the numbers of required hotel rooms and meals for disrupted passengers. The use of the exemplary embodiments can also significantly improve the passenger's travel experience and therefore reinforce the passenger's loyalty towards the airline.

An aspect of this invention aids an airline in dealing with a massive travel disruption by enabling airline flight analysts to better forecast flight load factors through the use of interactive confirmation/refusal communications with rebooked passengers. This information can be directly displayed in one or both of Inventory and Departure Control System (DCS) windows where all re-accommodation processes are managed.

The exemplary embodiments of this invention provide for a novel transversal integration and synergy of re-accommodation, customer communication and flight optimization business. All applicable airline systems are enabled to communicate with one another and be simultaneously updated to ensure consistency among all systems and personnel involved while also providing accurate data all along the re-accommodation process in order for airline personnel and systems to make informed and optimum decisions.

A two-way communication between passengers and an airline is put in place. A re-accommodation proposal is sent from the airline to the passenger and an answer is required from the passenger on the likelihood that the passenger will accept the proposed travel change. Passengers can be incentivized to respond to the re-accommodation proposal such as by offering a reward (e.g., a certain amount of points/miles applicable to the passenger's loyalty program). The use of interactive and automated sms/e-mail/texting, as examples, enables customer support resources to be utilized more efficiently by allowing the airline to allocate human resources on those passengers who actually require assistance.

An aspect of this invention is an ability to reduce the no-show uncertainty to optimize the airline's load factor during or following a period of massive flight disruption.

As was noted above, RMS recommendations to the Inventory system can become inaccurate with respect to providing flight management indicators (such as overbooking factors and/or numbers of seats to be sold in a given class) when a major disruption occurs. In the case of an exceptional disruption the demand for seats becomes significantly larger than the offer of seats.

In accordance with the aspect of this invention airline agents in charge of re-accommodation and flight load control management are provided with accurate decision-making data by a real-time integration of passenger feedback with the airline's Passenger Service System. By anticipating as much as is possible the number of no-show passengers the airline's agents are enabled to optimize flight loading factors. The use of this invention enables the airline to determine the show/no-show status of re-accommodated passengers in order to reassign a released seat to another disrupted passenger that otherwise would not have been booked to fly. This process is iterative as newly re-accommodated passengers could also deny a proposed itinerary, releasing seats for other disrupted passengers.

The use of the embodiments of this invention enables the system integration of customer information, in real time, in the airline's inventory and departure control systems and thereby also a flight analyst who is making decisions related to capacity and revenue management.

The embodiments use certain components providing communication with customers, the storage of customer information in a unique booking record and the synchronization of records with the airline's inventory system, and integrates these components, in real time, to enable airline flight managers to better understand the status of disrupted passengers in a context where a conventional demand forecast is no longer applicable.

The exemplary embodiments of this invention are capable of efficiently handling a large number of disrupted flights and the resulting passenger communication traffic generated by responses from disrupted passengers in a safe manner, thereby avoiding any passenger identity issues and lost messages.

The occurrence of re-accommodation message delivery to a disrupted passenger can be recorded (time stamped) in the passenger's PNR. In addition, the occurrence of reception of a reply from the passenger (e.g., accept the re-accommodation, reject the re-accommodation) can also be recorded (time stamped) in the passenger's PNR. There is also an ability to take note of non-responsive passengers, i.e., those that do not respond to a re-accommodation message that is delivered to them. All of this information is useful to the airline during the re-accommodation process.

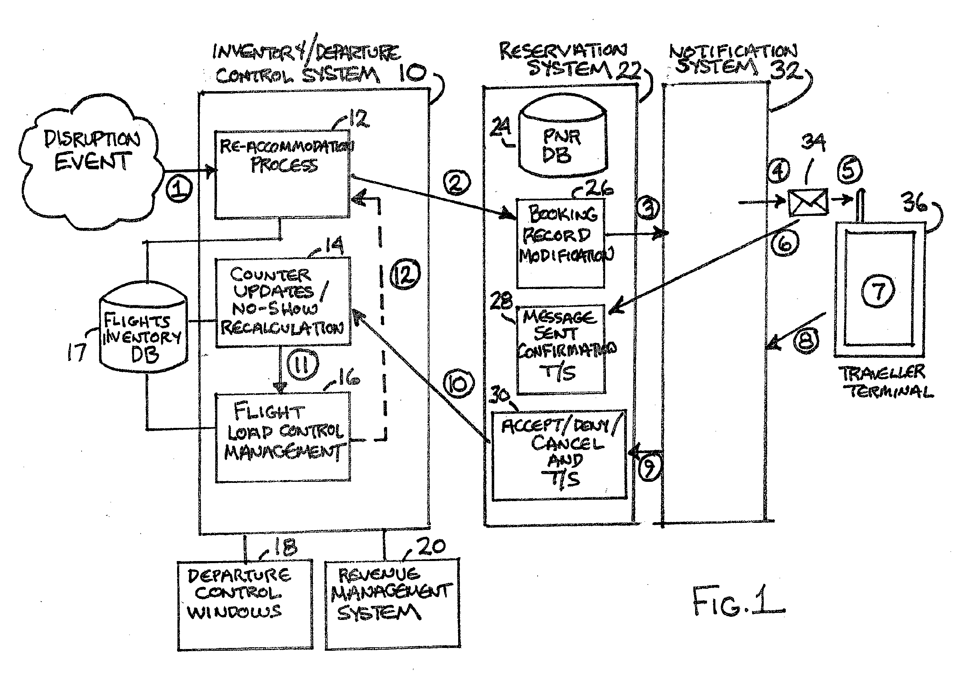

Reference is made to FIG. 1 for showing a system level view of a number of components that can be used to implement this invention. FIG. 1 includes an inventory/departure control system 10 connected with departure control windows 18 and a revenue management system (RMS) 20 of the airline. FIG. 1 further includes a reservation system 22 that includes or is connected with a PNR database (DB) 24 and a traveler/passenger notification system 32. It is assumed that travelers have some type terminal 36 such as a cellular phone, smartphone, landline phone, personal digital assistant (PDA), a desktop or portable personal computer (PC), a notebook computer, a tablet computer, or in general any type of communication device to which an electronic message (e.g., sms, email, text message) or a voice message 34 can be sent by the notification system 32, and with which the traveler can send a response. It is further assumed that the PNR database 24 includes some type of contact information (e.g., a phone number) in each PNR associated with passengers. This contact information can be used by the notification system 32 when sending messages to travelers.

For the purposes of describing this invention the inventory/departure control system 10 can be assumed to include certain function units or modules including a re-accommodation process module 12, a counter update/no-show recalculation module 14 and a flight load control management module 16. The reservation system 22 can be assumed to include a booking record modification module 26, a message sent confirmation and time stamp (T/S) module 28 and a traveler response accept/deny/cancel and T/S module 30.

Associated with the inventory/departure control system 10 is a flights inventory database (DB) 17 that can be used during the re-accommodation and related processes described in detail below.

The re-accommodation process module 12 of the inventory/departure control system 10 is triggered to respond to an occurrence of a disruption event at step 1. A disruption event can include changes to aircraft, the flight routing, the timing of a flight, and the status of a flight or a flight leg. A disruption event can occur due to inclement weather, other natural occurrences such as a volcanic eruption or an earthquake, or human-caused scenarios such as a labor strike. In this case messages are generally sent to the airline departure control agent or to a load control supervisor for action and decision making.

The inventory /departure control system 10 includes those applications that enable an airline to manage the distribution of its flights. This includes the creation, management and publication of flight schedules. The inventory /departure control system 10 also includes those applications that enable an airline to accomplish the selling of space (seats), where recommendations are processed from the revenue management system 20 in order to calculate availability that is used to accept or deny sell requests. The inventory /departure control system 10 further includes those applications that enable an airline to perform passenger check-in, and control flight capacity and load as planned flights must meet applicable weight and balance rules. The inventory /departure control system 10 also includes those applications that enable an airline to perform re-accommodation, where PNRs are managed during flight, or where schedule-related changes or disruptions are responded to by selecting alternate flights and lists of re-accommodated passengers are generated. The inventory /departure control system 10 also includes those applications that enable an airline to manage seating, by allowing the airline to allocate and re-accommodate seats based on pre-defined seating rules, and which take into account customer value and preferences.

The reservation system 22 enables bookings to be made for a wide variety of services, including services that compete with one another (e.g., different airlines). The reservation system 22 contains information concerning schedules, availability, fares and related services, and through which reservations can be made and/or tickets issued. The reservation system 22 typically makes some or all of these facilities available to subscribers, and which are used by airlines and travel agencies in order to make reservations on flights, hotels, car rentals, etc.

The notification system 32 has an ability to notify customers via several media according to the airline's notification policy and allows the customer to respond to a sent message 34. For example, technology can be present that allows customers to send a reply to a text message which can then be integrated into the existing customer service processes.

A message 34 sent to a disrupted passenger from the notification system 32 may be viewed as a re-accommodation proposal that can generally be accepted, rejected or not received / ignored by the disrupted passenger.

When a disruption event occurs, the re-accommodation is handled within the airline's inventory/departure control system 10 by the re-accommodation process module 12. An airline agent in charge, with the aid of the re-accommodation tools, determines new itineraries for disrupted passengers. A ranking can be made among all disrupted passengers in order to re-accommodate passenger with a highest value to the airline (e.g., those passengers that have a higher intrinsic worth such as those passengers with a highest loyalty card level or such as those passengers who paid a large amount of money for the travel that is disrupted). The availability status of newly selected flights can be checked at that time to avoid overbooking. Once selected, the booking record is modified (updated) by the booking record modification module 26 to reflect the cancellation of previous flight(s) and the booking of the new itinerary (step 2). At steps 3, 4 and 5 passengers are notified via, for example, sms, e-mail, or phone of the new flights.

It can be noted that the steps 1-5 can be viewed as basically describing a re-accommodation process as is currently used in the airline industry.

FIG. 1 also illustrates additional steps 6-12 that are performed in accordance with the embodiments of this invention.

At step 6 there is a confirmation of message delivery that is propagated back to the message sent confirmation and time stamp (T/S) module 28 via the notification system 32. The indication of message delivery is archived (stored), such as in the PNR for that particular passenger. At step 7, and after some variable delay period, the passenger that is impacted by the disruption event initiates a reply to the message 34 (responds with a set of predefined options: accept/ deny/cancel). The passenger at step 7 thus has the possibility to accept the new itinerary, ask for assistance to determine a different itinerary, or cancel the travel altogether. At step 8 the passenger's reply is propagated back to the notification system 32 and from the notification system 32 to the traveler response accept/deny/cancel and T/S module 30 (step 9).

Note that the passenger may not reply at all to the message 34, and this information can also be of value to the airline.

If a particular passenger is contacted by phone by the airline helpdesk, the airline agent can report the passenger's reply to the airline system.

All these responses are automatically processed and sent to the appropriate systems dealing with re-accommodation and flight load control. In this regard a comment is recorded in the passenger's PNR of when the message 34 was sent (step 6), and when the response (if any) was received (step 9). In addition, at step 10 appropriate counters are automatically incremented in the inventory/departure control system 10 by the counter update/no-show recalculation module 14 to record the passenger's response (acceptance confirmation of the proposed re-accommodation, refusal of the proposed re-accommodation, cancellation, or no response). The flight capacity is updated as well in response to the passenger reply information by the flight load control management module 16 at step 11. Using this information those airline personnel in charge of re-accommodation can re-optimize the flight(s). In the case of a passenger refusal or cancellation, some seats can be released (indicated by step 12) and the re-accommodation process 12 can initiate the sending of a message 34 to one or more additional disrupted passengers. The process is iterative and can occur as many times as needed until as many seats as possible are filled on the new or rescheduled flight or flights.

As can be appreciated, in the case of a flight disruption the embodiments of this invention enable an airline to reduce the risk of no-show passengers in order to maximize aircraft load factor, and enables the airline to recover more efficiently, more rapidly and with less cost from the disruption event.

As aspect of this invention is thus an automated system and method for taking passenger reactions into account.

The ETB in an Inventory can be defined as a counter stored at leg-cabin level that represents how many customers are expected to board a flight. Generally, the ETB is provided by the airline Revenue Management system. It can also be calculated by the Inventory in some cases.

As we have seen that the Revenue Management system controls are not more relevant in case of massive disruption, the invention proposes to introduce the DBF. The DBF is preferably directly calculated by the Inventory or the Departure control system.

The probability of no show associated to each case (answer, no answer etc) is defined in the system by the airline staff. They can be based on historical figures.

ETB is used in daily flight analyst activity, to control the flight load and take actions to act on the sell/pricing if not satisfying enough. ETB with DBF is used in case of massive re accommodation. If the DBF (number of people that we expect to board) is less than the number of physical seats of the plane, then the free seats can be offered to disrupted passengers.

ETB with DBF will be used by the airline staffs that are in charge of recovering the disruption.

Thus, a novel Expected To Board (ETB) factor can be used in a case of a disruption event:

$$ETB_{(Segment/Class)} = (\textstyle\sum booking) / DBF,$$

where:

DBF is a "Disruption Booking Factor" and is given by

$$DBF = f_{(p \text{ (standard no-show)}, \ p_{\text{(confirm or accept re-accommodation)}}, \ p_{\text{(no reply)}}, \ p_{\text{(cancel)}}, \ p_{\text{(deny, request alternative re-accommodation)}})}, \text{ where } p \text{ indicates probability.}$$

For example, we have a flight YY1 with Nyy1 physical seats. YY1 has NgA already booked seats and Nyy1-Nga available seats.

The YY2 flight is disrupted. It has bookings on it. Nyy1-NgA passengers of the disrupted flight YY2 can be re accommodated on YY1. Preferably these passengers are the (Nyy1 - NgA) first ranked passengers on YY2.

For instance, flight YY1 has Nyy1=100 physical seats, with 80 available seats and NgA=20 bookings. Flight YY2 has 120 bookings. 80 (Nyy1-NgA) passengers of flight YY2 can be re accommodated on YY1. Preferably these passengers are the 80 first ranked passengers on YY2.

After one hour, we have the following result where disrupted passengers can be classified in groups according to their behavior:

- Group B: disrupted passengers who answered positively to fly with YY1.
- Group C: disrupted passengers who answered negatively to fly with YY1.
- Group D: disrupted passengers who did not answer yet.
- Group E: disrupted passengers who answered they will take another flight, another transportation mode or answered that they cancel their journey. They do not want to be re-accomodated.
  Group A gathers the passengers who initially booked on the non disrupted flight YY1.

NgX is the number of passengers of Group X, X being A, B, C, D or E. For instance, NgA=20, NgB=20, NgC=20, NgD=20, NgE=20.

Airline staff can associate to each group a probability that passengers show up at the airport for flight YY1. 'PgX' is the probability for a passenger of Group X to show-up for flight YY1, X being A, B, C, D or E.

For instance, PgA $\geq$ 80%; PgB $\geq$ 98%; PgC $\geq$ 0%; PgD $\geq$ 50%; PgE $\geq$ 0%.

$$ETB = = \Sigma \ PgX.NgX \text{ with } X=A\ldots,$$

$$= PgA.NgA+ PgB.NgB+ PgC.NgC+ PgD.NgD+ PgE.NgE$$

With the figures of the non limitative above example:

$$ETB= 20*80\%+20*98\%+20*0\%+20*50\%+20*0\%= 45.6 \rightarrow \text{ rounded up to 46 passengers}$$

It means that people in charge of re accommodation can now offer: Nyy1 - TEB = 100 physical seats - 46 expected to board passengers = 54 seats. They can then re-launch a re-accommodation for other passengers of flight YY2. Preferably, these other passengers are ranked 81to134 on flight YY2. The process can be iterative. Preferably, the process ends when there is no more seats to be offered.

Note that while a conventional overbooking factor (OF) only takes into consideration "standard no-show" passengers, the Disruption Booking Factor additionally considers the responses (or lack of response) received from the notified disrupted passengers.

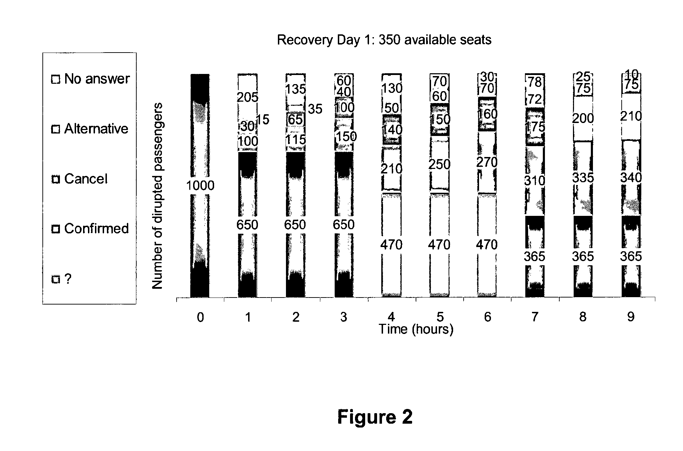

An example of the utility of this invention will now be provided with respect to FIG. 2. Assume for this non-limiting example that a heavy snowfall cancels many flights during a two day period in some geographic region. This disruption even impacts 1000 passengers that should have flown from A to B on airline YY. Passengers have been warned via sms and email that that their flight was cancelled and that they will be soon contacted with an alternative itinerary proposal. Assuming reliable weather forecasts, YY flight analysts are notified that flight operations will return to normal on the day following the snow fall.

The re-accommodation process is therefore launched on the 1000 disrupted passengers.

On Recovery Day 1 assume that 350 free seats are still available on flights from A to B, which represents about one third of the disrupted passengers. The top priority passengers are therefore protected on these flights. A sms is generated and sent to these passengers with the following three alternative possible actions (Re-accommodation #1):

1) I do accept the new flight

2) I decide to cancel my travel and obtain a refund

3) I am not satisfied with the proposed solution. You are invited to contact the YY call center.

Passengers are invited to respond within 3 hours.

FIG. 2 shows the status evolution of the disrupted passengers. After three hours elapses it can be seen that:

150 out of the 350 contacted passengers have chosen to confirm the proposed re-accommodation option;

100 passengers have decided to cancel their travel;

40 passengers are not satisfied with the proposed solution; and

60 passengers have not responded to the sms.

As a result 650 passengers of the original 1000 still need to be re-accommodated.

It can further be seen that 140 seats will still not be occupied due to passengers cancelling their travel or wanting to opt for another option to travel. Some of these passengers may have found other ways to travel (e.g., by train) or simply decided to cancel or postpone their travels.

Based on past experience and their knowledge of the market, flight analysts can decide as well to release a certain number of seats for passengers that have not answered. This means that after three hours some seats are re-proposed to new passengers (Re-accommodation #2). Here again, some passengers may not accept this proposal.

Due to this iterative process and the ability to provide real-time information to the flight analysts, in one day almost the entire available 350 seats are offered to passengers with an actual willingness to travel. However, without the use of iterative process made possible by this invention only 150 to 200 seats would have been occupied, while 650 passengers were still waiting potentially for a flight. By the use of the iterative process it can be estimated that the situation return to normal more or less within two days, while it would have required at least three days by using the conventional process (the process without the execution of the steps 6-12 shown in FIG. 1.

Clear advantages to the airline include at least the cost savings due to reduced compensation, accommodation and meal costs for one or two nights and days for hundreds of passengers. The use of the invention also allows directing to the call center only those passengers with specific itinerary needs. The airline is also placed in a position to better optimize their ground and flight operations (e.g., aircraft swap) according to the actual/confirmed demand. In addition, the affected passengers experience an interactive, timely and personalized communication that is initiated by the airline, at a time when all other traditional communication channels (e.g., call centers, customer service desks) are saturated due to the occurrence of the disruption event.

It should be noticed that the invention allows reducing the overall no-show rate. Indeed, it allows decreasing the no-show of passengers who would have flown if there was no disruption, but also considering the no-show of passengers who were originally booked on the operating flight, and that would not have shown-up anyway even if there was no disruption.

It should be noted that this invention could be implemented in the inventory/departure control system 10, or in the revenue management system (RMS) 20, or in a distributed manner between these systems, or it could be implemented in a separate application/server that is interfaced with these systems and with the reservation system 22.

As should be realized all of these various functions/applications and systems can each comprise at least one data processor operating under control of software instructions stored in at least one memory. Further, the inventory/departure control system 10, reservation system 22, the notification system 32 and the revenue management system 20 can each be implemented as respective servers co-located at one installation or they may be geographically distributed and interconnected via any type of suitable data communication network implemented in any suitable manner and configured to operate with the hardware/software architecture of the respective computing platforms. If provided as a separate system/functionality the re-accommodation functions and applications of this invention could be implemented as a module of software instructions installed and integrated within one or more of the inventory/departure control system 10 and the revenue management system 20, or it could be provided as mentioned above as a component of a standalone server/computing platform.

Based on the foregoing it should be apparent that the exemplary embodiments of this invention provide a method, apparatus and computer program(s) to respond to a period of flight disruption by iteratively re-accommodating disrupted passengers to flights leaving after an end of the flight disruption period based on responses of disrupted passengers to re-accommodation proposals communicated to the disrupted passengers. In the method iteratively re-accommodating is performed so as to attempt to minimize a number of no-show disrupted passengers for those flights leaving after the end of the disruption period.

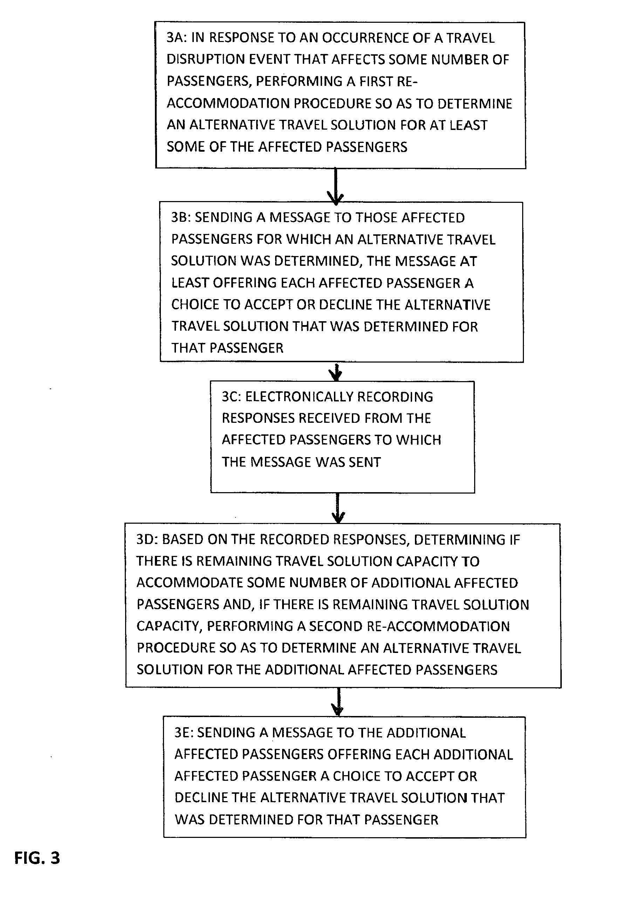

FIG. 3 is a logic flow diagram that illustrates the operation of a method, and a result of execution of computer program instructions, in accordance with the exemplary embodiments of this invention. In accordance with these exemplary embodiments a method performs at step, at Block 3A, in response to an occurrence of a travel disruption event that affects some number of passengers, of performing a first re-accommodation procedure so as to determine an alternative travel solution for at least some of the affected passengers. At Block 3B there is a step of sending a message to those affected passengers for which an alternative travel solution was determined, the message at least offering each affected passenger a choice to accept or decline the alternative travel solution that was determined for that passenger. At Block 3C there is a step of electronically recording responses received from the affected passengers to which the message was sent. At Block 3D there is a step performed, based on the recorded responses, of determining if there is remaining travel solution capacity to accommodate some number of additional affected passengers and, if there is remaining travel solution capacity, performing a second re-accommodation procedure so as to determine an alternative travel solution for the additional affected passengers. At Block 3E there is a step of sending a message to the additional affected passengers offering each additional affected passenger a choice to accept or decline the alternative travel solution that was determined for that passenger.

In general, the various exemplary embodiments may be implemented in hardware or special purpose circuits, software, logic or any combination thereof. For example, some aspects may be implemented in hardware, while other aspects may be implemented in firmware or software which may be executed by a controller, microprocessor, server, main frame computer, or other computing device, although the invention is not limited thereto. While various aspects of the exemplary embodiments of this invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Various modifications and adaptations to the foregoing exemplary embodiments of this invention may become apparent to those skilled in the relevant arts in view of the foregoing description, when read in conjunction with the accompanying drawings. However, any and all modifications will still fall within the scope of the non-limiting and exemplary embodiments of this invention.

For example, while the exemplary embodiments have been described above primarily in the context of airlines providing air travel for passengers it should be appreciated that the exemplary embodiments of this invention are not limited for use with only airlines and air travel, but can be applied more generally to other types of carriers where travel involves booking, pricing and ticketing procedures.

Further, the various names used for the described parameters (e.g., ETB, DBF, etc.) are not intended to be limiting in any respect, as these parameters may be identified by any suitable names. Further, the formulas and expressions that use these various parameters may differ from those expressly disclosed herein. Further, the various names assigned to different types of messages and message delivery systems channels (e.g., sms, e-mail, etc.) are not intended to be limiting in any respect, as these various message types and delivery channels may be identified by any suitable names.

Furthermore, some of the features of the various non-limiting and exemplary embodiments of this invention may be used to advantage without the corresponding use of other features. As such, the foregoing description should be considered as merely illustrative of the principles, teachings and exemplary embodiments of this invention, and not in limitation thereof.

**Claims**

1. A computer implemented method to respond to a disruption of airline flights during and following a flight disruption period, **characterized in that** it comprises:

   in response to an occurrence of a period of flight disruption;
   iteratively re-accommodating disrupted passengers to flights leaving after an end of the flight disruption period based on responses of disrupted passengers to re-accommodation proposals communicated to the disrupted passengers;
   where iteratively re-accommodating is performed so as to attempt to minimize a number of no-show disrupted passengers for those flights leaving after the end of the disruption period.

2. The method of claim 1, where iteratively re-accommodating comprises sending messages to disrupted passengers, each message comprising a re-accommodation proposal, storing a time related to the proposal and storing a time that the response was received.

3. The method of any one of claims 1 or 2, where the time related to the proposal is any one of: the time when the message was sent to the particular disrupted passenger and the time when the message is received by the particular disrupted passenger.

4. The method of any one of claims 1 to 3, where a first re-accommodation comprises determining after some predetermined period of time those disrupted passengers to whom a message was sent but from which a response is not received during said first re-accommodation, and where a second re-accommodation, subsequent to said first re-accommodation, is performed for a number of additional disrupted passengers that is based on a number of responses received that declined a re-accommodation proposal communicated during said first re-accommodation and on a number of disrupted passengers to whom a message was sent but from which a response was not received during said first re-accommodation.

5. The method of any one of claims 1 to 4, where a first re-accommodation procedure is performed at least for those disrupted passengers deemed to have a higher intrinsic worth to an air travel provider than other disrupted passengers.

6. The method of any one of claims 1 to 5, where a re-accommodation proposal is comprised of a flight or flights operated subsequent to the period of flight disruption by at least one of the same air travel provider or another air travel provider.

7. A non-transitory computer-readable medium that contains software program instructions, where execution of the software program instructions by at least one data processor results in performance of operations that comprise execution of the method of any one of the preceding claims 1-6.

8. A travel provider system, comprising:

at least one data processor; and
at least one memory including computer program code, where the memory and computer program code are configured to, with the at least one data processor, cause the system at least to perform, in response to an occurrence of a travel disruption event that affects some number of passengers, a first re-accommodation procedure so as to determine an alternative travel solution for at least some of the affected passengers; to send a message to those affected passengers for which an alternative travel solution was determined, the message at least offering each affected passenger a choice to accept or decline the alternative travel solution that was determined for that passenger; to electronically record responses received from the affected passengers to which the message was sent; to determine, based on the recorded responses, if there is remaining travel solution capacity to accommodate some number of additional affected passengers and, if there is remaining travel solution capacity, to perform a second re-accommodation procedure so as to determine an alternative travel solution for the additional affected passengers and to send a message to the additional affected passengers offering each additional affected passenger a choice to accept or decline the alternative travel solution that was determined for that passenger, where the re-accommodation procedures are performed and the messages are sent in an iterative manner so as to maximize a passenger loading factor of the alternative travel solution.

9. The system of claim 8, where the memory and computer program code are further configured to, with the at least one data processor, to store a time in a record of a passenger name record database that the message was any one of sent or received, and when recording the response to also store in the same record of the passenger name record database a time that the response was received.

10. The system of claim 9, where the memory and computer program code are further configured to, with the at least one data processor, to determine after some predetermined period of time those affected passengers to whom a message was sent but from which a response is not received, and where the second re-accommodation procedure is performed for a number of additional affected passengers that is based on a number of responses received that declined the alternative travel solution determined during the first re-allocation procedure and on a number of affected passengers to whom a message was sent but from which a response was not received.

11. The system of claim 8, where the memory and computer program code are further configured to, with the at least one data processor, to perform the first re-accommodation procedure at least for those affected passengers deemed to have a higher intrinsic worth to the travel provider than other affected passengers.

12. The system as in any one of claims 8-11, where the travel provider is an air travel provider, where the travel disruption event results in a cancellation of one or more flights during a period of time, and where the determined alternative travel solution comprises a flight or flights operated subsequent to the period of time by at least one of the same air travel provider or another air travel provider.

13. The system as in any one of claims 8-12, where the at least one data processor and the at least one memory including computer program code comprise a part of any one of :

- an inventory/departure control system of the air travel provider,
- a revenue management system of the air travel provider,
- an application/server that is interfaced with an inventory/departure control system, a revenue management system, and a reservation system of the air travel provider,

14. The system as in any one of claims 8-13, further comprising a notification system configured to send to and receive from the affected passengers electronic messages based on passenger contact information stored in the passenger name record database.

15. The system as in any one of claims 8-14, where the memory and computer program code are further configured to, with the at least one data processor, to interactively adjust flight load and flight balance factors based on responses received from affected passengers.

FIG.1

INVENTORY/DEPARTURE CONTROL SYSTEM 10

RESERVATION SYSTEM 22

NOTIFICATION SYSTEM 32

DISRUPTION EVENT

RE-ACCOMMODATION PROCESS 12

COUNTER UPDATES/NO-SHOW RECALCULATION 14

FLIGHTS INVENTORY DB 17

FLIGHT LOAD CONTROL MANAGEMENT 16

DEPARTURE CONTROL WINDOWS 18

REVENUE MANAGEMENT SYSTEM 20

PNR DB 24

BOOKING RECORD MODIFICATION 26

MESSAGE SENT CONFIRMATION T/S 28

ACCEPT/DENY/CANCEL AND T/S 30

TRAVELLER TERMINAL 36

EP 2 693 375 A1

14

Figure 2

3A: IN RESPONSE TO AN OCCURRENCE OF A TRAVEL DISRUPTION EVENT THAT AFFECTS SOME NUMBER OF PASSENGERS, PERFORMING A FIRST RE-ACCOMMODATION PROCEDURE SO AS TO DETERMINE AN ALTERNATIVE TRAVEL SOLUTION FOR AT LEAST SOME OF THE AFFECTED PASSENGERS

3B: SENDING A MESSAGE TO THOSE AFFECTED PASSENGERS FOR WHICH AN ALTERNATIVE TRAVEL SOLUTION WAS DETERMINED, THE MESSAGE AT LEAST OFFERING EACH AFFECTED PASSENGER A CHOICE TO ACCEPT OR DECLINE THE ALTERNATIVE TRAVEL SOLUTION THAT WAS DETERMINED FOR THAT PASSENGER

3C: ELECTRONICALLY RECORDING RESPONSES RECEIVED FROM THE AFFECTED PASSENGERS TO WHICH THE MESSAGE WAS SENT

3D: BASED ON THE RECORDED RESPONSES, DETERMINING IF THERE IS REMAINING TRAVEL SOLUTION CAPACITY TO ACCOMMODATE SOME NUMBER OF ADDITIONAL AFFECTED PASSENGERS AND, IF THERE IS REMAINING TRAVEL SOLUTION CAPACITY, PERFORMING A SECOND RE-ACCOMMODATION PROCEDURE SO AS TO DETERMINE AN ALTERNATIVE TRAVEL SOLUTION FOR THE ADDITIONAL AFFECTED PASSENGERS

3E: SENDING A MESSAGE TO THE ADDITIONAL AFFECTED PASSENGERS OFFERING EACH ADDITIONAL AFFECTED PASSENGER A CHOICE TO ACCEPT OR DECLINE THE ALTERNATIVE TRAVEL SOLUTION THAT WAS DETERMINED FOR THAT PASSENGER

FIG. 3

Europäisches
Patentamt

European
Patent Office

Office européen
des brevets

**EUROPEAN SEARCH REPORT**

Application Number

EP 12 36 8018

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is conventional. Its use for carrying out non-technical processes forms part of common general knowledge and it was widely available to everyone at the date of filing of the present application. No documentary evidence is therefore considered necessary. (See Official Journal EPO 11/2007, pages 592ff and 594ff)<br><br>----- | | INV.<br>G06Q10/00 |
| | | | TECHNICAL FIELDS SEARCHED (IPC)<br><br>G06Q |

The present search report has been drawn up for all claims

| Place of search | Date of completion of the search | Examiner |
|---|---|---|
| Munich | 16 May 2013 | Viets, Ana |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................

& : member of the same patent family, corresponding
    document

EPO FORM 1503 03.82 (P04C01)